# EUROPEAN PATENT SPECIFICATION

(11) **EP 3 842 847 B1**
(45) Date of publication and mention of the grant of the patent: **09.04.2025**
(21) Application number: 20842667.6
(22) Date of filing: 19.08.2020
(51) Int. Cl.: G02B 6/44

(54) **OPTICAL CABLE STRUCTURE AND PREPARATION METHOD THEREOF**
OPTISCHE KABELSTRUKTUR UND HERSTELLUNGSVERFAHREN DAFÜR
STRUCTURE DE CÂBLE OPTIQUE ET PROCÉDÉ DE PRÉPARATION ASSOCIÉ

(30) Priority: 13.11.2019 CN 201911106121
(43) Date of publication of application: 30.06.2021
(73) Proprietor: HENGTONG OPTIC-ELECTRIC CO., LTD, Suzhou, Jiangsu 215234 (CN)
(72) Inventor: SUN, Wei, Suzhou, Jiangsu 215234 (CN); ZHAN, Xuelong, Suzhou, Jiangsu 215234 (CN); ZHANG, Xinyuan, Suzhou, Jiangsu 215234 (CN); XIA, Wenkui, Suzhou, Jiangsu 215234 (CN); GU, Xiaofeng, Suzhou, Jiangsu 215234 (CN); SHENG, Huiliang, Suzhou, Jiangsu 215234 (CN); QIU, Hua, Suzhou, Jiangsu 215234 (CN); CUI, Zhongmin, Suzhou, Jiangsu 215234 (CN); SHEN, Chenxi, Suzhou, Jiangsu 215234 (CN); ZHANG, Wenmei, Suzhou, Jiangsu 215234 (CN)
(74) Representative: Casalonga
(86) International application number: PCT/CN2020/109990
(87) International publication number: WO 2021/093395

(56) References cited:
- CN-A- 110 780 401
- CN-U- 202 771 069
- CN-U- 203 536 055
- CN-U- 203 536 055
- CN-U- 205 049 793
- CN-U- 209 327 635
- JP-A- 2000 131 575
- JP-A- 2002 169 067
- JP-A- H0 450 811
- JP-A- H0 450 811
- US-A- 5 495 546

## Description

### FIELD OF THE PRESENT DISCLOSURE

The invention relates to the technical field of communication optical cables, in particular to an optical cable structure and a preparation method therefor.

### BACKGROUND OF THE PRESENT DISCLOSURE

With the development of the communication technology, the demand for optical cables is increasing, and at the same time, higher requirements are put forward on the structure and performance of the optical cables.

The common optical cable structure mainly comprises a cable sheath on the surface layer and a plurality of parallel-provided optical fibers inside. The cable sheath mainly plays a safety protection role on the optical fibers; in the subsequent wrapping or rolling and bundling process of the optical cable, the relative positions of a plurality of optical fibers are prone to dislocation and winding.

When the optical cable enters a household or needs to be switched, the cable sheath needs to be stripped firstly, and a plurality of optical fibers separately diverge. However, since a plurality of optical fibers in the existing optical cable is prone to winding, it is inconvenient to diverge the plurality of optical fibers such that time and labor are wasted and normal wiring is affected.

CN205049793U has disclosed an optical cable structure which includes: a first jacket, a supporting skeleton provided in the first jacket, and optical fiber units; wherein holding leaves are provided to extend away from the supporting skeleton, such that the optical fiber units may be held by the holding leaves.

CN203536055U discloses a figure 8 cable.

### SUMMARY OF THE PRESENT DISCLOSURE

The invention aims to provide an optical cable structure and a preparation method therefor, so that the technical problem that optical fibers in the existing optical cable structure are inconvenient to diverge is solved.

In order to solve the technical problem, the invention provides an optical cable structure according to claims 1-8.

The invention further provides a preparation method for an optical cable structure according to claim 9.

According to the technical scheme, the beneficial effects achieved by the invention are as follows:

the present invention provides an optical cable structure comprising a first jacket and a supporting skeleton provided within the first jacket; the supporting skeleton is provided with an accommodating groove for accommodating optical fiber unit, and the supporting skeleton is configured to always have a clamping force applied to the optical fiber unit.

Because the optical fiber unit is provided in the accommodating groove on the supporting skeleton, a plurality of accommodating grooves can be provided, the plurality of accommodating grooves can separate a plurality of optical fiber units, and the supporting skeleton is configured to always have a clamping force applied to the optical fiber units, so that the positions of the optical fiber units are limited to move, and the winding among the plurality of optical fiber units is avoided. After the first jacket is stripped, a plurality of optical fiber units can quickly diverge from a plurality of accommodating grooves so that time and labor are saved.

### BRIEF DESCRIPTION OF THE DRAWINGS

The drawings in the following description are some embodiments of the present invention.
Fig. 1 is a schematic structural view showing a cross-section of an optical cable structure according to an embodiment of the present invention in a first embodiment;
Fig. 2 is a schematic structural view showing a cross-section of an optical cable structure according to an embodiment of the present invention in other embodiments;
Fig. 3 is a process flow diagram of a preparation method for an optical cable structure according to an embodiment of the present invention;
Fig. 4 is a flow diagram of a cable core forming procedure in a preparation method for an optical cable structure according to an embodiment of the present invention;
Fig. 5 is a flow diagram of a conductive core forming procedure in a preparation method for an optical cable structure according to an embodiment of the present invention.

### List of reference numerals in the drawings:

100 first jacket;
200 supporting skeleton;
210 skeleton body;
220 reinforcing core;
300 accommodating groove;
400 optical fiber unit;
410 transmission fiber;
420 nylon tight cover;
500 water-blocking layer;
510 heat-insulating layer;
600 second jacket;
700 conductive wire unit;
710 transmission wire;
720 wire jacket;
800 shielding layer;
810 metal braided layer;
820 second water-blocking tape.

### DESCRIPTION OF THE EMBODIMENTS

The technical schemes of the present invention will be clearly and completely described below in conjunction with the accompanying drawings. Obviously, the described examples are only a part of the examples of the present invention, rather than all the examples. Based on the examples of the present invention, all other examples obtained by one of ordinary skills in the art without involving any inventive efforts are within the scope of the present invention as defined by the appended claims

In describing the present invention, it is to be understood that the orientations or positional relationships indicated by the terms "center", "upper", "lower", "left", "right", "vertical", "horizontal", "inner", "outer", and the like are based on the orientations or positional relationships shown in the drawings for purposes of describing the invention and simplifying the description only, and are not intended to indicate or imply that the referenced device or element must have a particular orientation or be constructed and operated in a particular orientation. It is therefore not to be understood as limiting the invention. Furthermore, the terms "first", "second", "third", as they appear, are used for descriptive purposes only and are not to be construed as indicating or implying relative importance.

In describing the present invention, it is to be understood that the terms "install", "link", "connect", as they appear, are to be construed broadly, for example, either fixedly connected or detachably connected or integrated connected, unless expressly specified and limited otherwise; it can be a mechanical connection or an electrical connection; the connection may be connected directly or indirectly through intervening media, and the connection may be an internal connection between two elements. The specific meaning of the above terms in this invention will be understood by those of ordinary skills in the art, as the case may be.

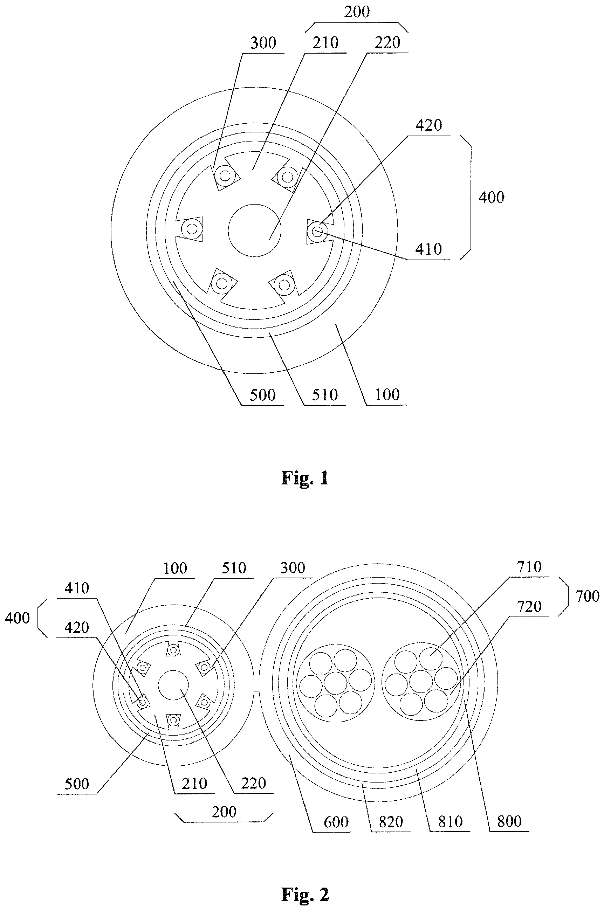

As shown in Fig. 1, the present example provides an optical cable structure including a first jacket 100 and a supporting skeleton 200 provided within the first jacket 100; the supporting skeleton 200 is provided with an accommodating groove 300 for accommodating optical fiber unit 400, and the supporting skeleton 200 is configured to always have a clamping force applied to the optical fiber unit 400.

Specifically, the first jacket 100 is provided as a hollow sleeve, the first jacket 100 is sleeved outside the supporting skeleton 200, the accommodating groove 300 is provided as a groove formed in the supporting skeleton 200, and the axis of the accommodating groove 300 is parallel to the axis of the supporting skeleton 200. Preferably, the accommodating grooves 300 are provided in a plurality, and the plurality of accommodating grooves 300 is provided in the supporting skeleton 200. The axes of the plurality of accommodating grooves 300 are parallel to each other, the plurality of accommodating grooves 300 is uniformly provided around the axis of the supporting skeleton 200 at intervals in sequence, one optical fiber unit 400 is placed in each accommodating groove 300, any two adjacent optical fiber units 400 are separated by the accommodating grooves 300, and the winding of two adjacent optical fiber units 400 is avoided. The width of the accommodating groove 300 is slightly smaller than the diameter of the optical fiber unit 400, the optical fiber unit 400 is clipped in the accommodating groove 300, and the surface layer of the optical fiber unit 400 is slightly deformed, so that the accommodating groove 300 limits the movement of the optical fiber unit 400 and prevents the optical fiber unit 400 from being separated from the accommodating groove 300.

According to the optical cable structure provided by the example, since the optical fiber unit 400 is provided in the accommodating groove 300 on the supporting skeleton 200, a plurality of accommodating grooves 300 can be provided. The plurality of accommodating grooves 300 can separate the plurality of optical fiber units 400, and the supporting skeleton 200 is configured to always have a clamping force applied to the optical fiber units 400, so that the positions of the optical fiber units 400 are limited to move, and the winding among the plurality of optical fiber units 400 is avoided. After the first jacket 100 is stripped, a plurality of optical fiber units 400 can quickly diverge from the plurality of accommodating grooves 300 so that time and labor are saved.

On the basis of the example, the supporting skeleton 200 in the optical cable structure provided by the example further comprises a skeleton body 210 and a reinforcing core 220; a filling chamber is provided in the skeleton body 210, the reinforcing core 220 is provided in the filling chamber, and the accommodating groove 300 is provided on the skeleton body 210.

Specifically, the skeleton body 210 is extrusion molded by a high-density polyethylene material, and the reinforcing core 220 is made of a fiber-reinforced composite material. Both the skeleton body 210 and the reinforcing core 220 can be bent, and the reinforcing core 220 is used for enhancing the tensile strength of the skeleton body 210. The filling chamber is provided to be cylindrical. The reinforcing core 220 is filled in the filling chamber or the skeleton body 210 is extrusion molded outside the reinforcing core 220. The accommodating groove 300 is a groove formed in the skeleton body 210, and the accommodating groove 300 and the skeleton body 210 are integrally formed by extrusion molding.

Further, a water-blocking layer 500 and a heat-insulating layer 510 are sequentially provided between the first jacket 100 and the supporting skeleton 200 from inside to outside.

Specifically, the water-blocking layer 500 may be provided as a water-blocking tape, a water-blocking yarn or a water-blocking powder or the like. Preferably, the water-blocking layer 500 is provided as a water-blocking tape, and the water-blocking tape is wrapped outside the supporting skeleton 200. The heat-insulating layer 510 may be provided as glass fiber, an asbestos fiber, or the like.

Further, the water-blocking layer 500 comprises a first water-blocking tape, wherein the first water-blocking tape is wrapped on the supporting skeleton 200. The heat-insulating layer 510 comprises a glass fiber layer, and the glass fiber layer is sleeved outside the first water-blocking tape.

Specifically, the first water-blocking tape can be fixed on the outside of the supporting skeleton 200 through binding yarns, and the first water-blocking tape is used for preventing water vapor from penetrating into the surface layer of the optical fiber unit 400. The glass fiber layer is provided between the first jacket 100 and the water-blocking tape. The glass fiber layer is made of glass fiber yarns, and the glass fiber yarns have good abrasion resistance, heat insulation and insulation properties, so that the external temperature can be isolated from the optical fiber unit 400, the optical cable can be ensured to still work normally under the condition that the temperature is too high or too low, and the optical cable can adapt to a severe natural environment. The insulation characteristic of the glass fiber layer can protect the optical cable from lightning strike or other electromagnetic interference. As the glass fiber layer is brittle, the crushed glass slag can damage the oral cavity of a mouse in the mouse biting process, making mice feel afraid of the optical cable and having the mouse-proof effect.

According to the optical cable structure provided by the example, the strength of the skeleton body 210 is improved by providing the reinforcing core 220, and the tensile property is better. By providing the first water-blocking tape, water vapor is prevented from penetrating into the optical cable to damage the optical fiber unit 400, and the waterproof capacity of the optical cable is improved. By providing the glass fiber layer, on one hand, the optical cable can be normally used in an extremely cold or hot environment, and on the other hand, the optical cable has a good mouse-proof effect and the use safety of the optical cable is improved.

On the basis of the example, further, as shown in Fig. 2, the optical cable structure provided by the example further comprises a second jacket 600 and a conductive wire unit 700 provided in the second jacket 600. The outer wall of the second jacket 600 is connected to the outer wall of the first jacket 100.

Specifically, the material of the second jacket 600 is the same as that of the first jacket 100. A plurality of conductive wire units 700 can be provided, and a plurality of conductive wire units 700 is provided in parallel and is provided in the first jacket 100. The conductive wire unit 700 comprises a transmission wire 710 and a wire jacket 720 wrapped outside the transmission wire 710, wherein the transmission wire 710 is preferably provided as a copper wire, the copper wire can be provided as a plurality of wires according to requirements, and the wire jacket 720 is provided as enameled skin outside of the copper wire. The first jacket 100 and the second jacket 600 are provided in parallel, and the outer surface of the first jacket 100 is connected with the outside surface of the second jacket 600. Preferably, the first jacket 100 and the second jacket 600 are provided as an integrally formed structure having an 8-shaped cross-sectional profile.

Further, between the second jacket 600 and the conductive wire unit 700, and from inside to outside, a shielding layer 800, a metal braided layer 810, and a second water-blocking tape 820 are sequentially provided.

Specifically, the shielding layer 800 is provided as a thin metal layer wrapped outside the conductive wire unit 700. Preferably, the shielding layer 800 is provided as an aluminum foil. The aluminum foil is wrapped outside the conductive wire unit 700 to form the aluminum foil shielding layer 800, and the aluminum foil shielding layer 800 isolates the magnetic field generated by the conductive wire unit 700 to avoid the interference with the communication of the optical fiber unit 400. The metal braided layer 810 is braided by a braiding machine, the metal braided layer 810 is braided outside the shielding layer 800. On one hand, the metal braided layer 810 improves the shielding effect on the conductive wire unit 700, and on the other hand, the tensile strength of the optical cable can be improved. The second water-blocking tape 820 is wrapped outside the metal braided layer 810. The second water-blocking tape 820 can be bound on the metal braided layer 810 by binding yarns to limit the movement of the position of the second water-blocking tape 820. The second water-blocking tape 820 can also be provided as a water-blocking substance such as water-blocking yarns or water-blocking powder and the like.

Further, both the first jacket 100 and the second jacket 600 are made of polyethylene material.

Specifically, the first jacket 100 and the second jacket 600 are integrally formed by polyethylene material through an extrusion molding process. The first jacket 100 and the second jacket 600 serve as protective layers of the outermost layers of the optical cable, and the polyethylene protective layer has good corrosion resistance, and water resistance and scratch resistance capacity. By manufacturing through an extrusion process, which is a mature process technology, the cost is low.

Further, along the direction in which the first jacket 100 points toward the supporting skeleton 200, the accommodating space of the accommodating groove 300 is gradually reduced, and the optical fiber unit 400 abuts against the inner wall of the accommodating groove 300.

According to the claimed invention, along the direction in which the first jacket 100 points to the supporting skeleton 200, the width of the accommodating groove 300 is gradually increased to form a groove structure with a smaller opening and a larger internal width dimension. The optical fiber unit 400 is embedded in the accommodating groove 300, and the optical fiber unit 400 abuts against the inner walls of the two sides of the accommodating groove 300 and the groove bottom. The surface layer of the optical fiber unit 400 is slightly deformed, so that the optical fiber unit is clipped in the accommodating groove 300, and the optical fiber unit 400 is prevented from being separated from the accommodating groove 300.

Further, the optical fiber unit 400 comprises a transmission optical fiber 410 and a nylon tight cover 420 sleeved outside the transmission optical fiber 410.

Specifically, the nylon tight cover 420 is extrusion molded outside the transmission optical fiber 410. One or more transmission optical fibers 410 can be provided in the nylon tight cover 420, and preferably, the present example provides an optical cable structure in which one transmission optical fiber 410 is provided within a nylon tight cover 420. The tight cover made of the nylon material has a long performance degradation period and is not easy to age. Compared with other materials, the tight cover can bear high and low temperature tests in a wider temperature range, and has a lasting protection effect on the transmission optical fiber 410.

According to the optical cable structure provided by the example, the conductive wire unit 700 is provided in the second jacket 600, and the outer wall of the first jacket 100 abuts against the outer wall of the second jacket 600 to form a photoelectric hybrid cable with an 8-shaped cross-section, so that the simultaneous transmission of electric energy and optical signal is realized. By providing the shielding layer 800, the metal braided layer 810 and the second water-blocking tape 820 between the conductive wire unit 700 and the second jacket 600, the electromagnetic shielding capacity, the tensile capacity and the water-proof capacity of the photoelectric hybrid cable are improved, and the use of the photoelectric hybrid cable is more reliable.

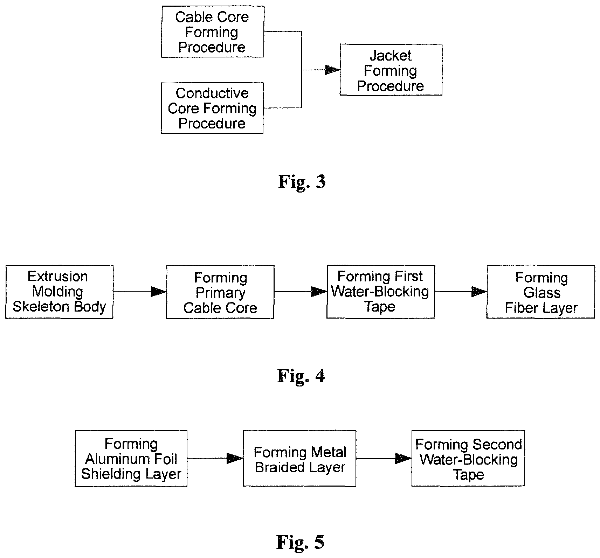

On the basis of the above examples, the example provides a preparation method for an optical cable structure. As shown in Fig. 3, the preparation method comprises a cable core forming procedure, a conductive core forming procedure and a jacket forming procedure. As shown in Fig. 4, the cable core forming procedure comprises: positioning the reinforcing core 220 on an extruder, and extrusion molding the skeleton body 210 outside the reinforcing core 220 through the extruder along the length direction of the reinforcing core 220; putting the optical fiber unit 400 into the accommodating groove 300 on the supporting skeleton 200 to form a primary cable core; wrapping the first water-blocking tape outside the primary cable core; curing and forming the glass fiber layer outside the first water-blocking tape through a curing machine to form a cable core. As shown in Fig. 5, the conductive core forming procedure comprises: wrapping aluminum foil outside the conductive wire unit 700 to form a shielding layer 800; braiding metal wires outside the shielding layer 800 through a braider to form a metal braided layer 810; and wrapping the second water-blocking tape 820 outside the metal braided layer 810 to form a conductive core. The jacket forming procedure comprises: simultaneously extrusion molding a polyethylene raw material outside the cable core and conductive core through an extruder to form the first jacket 100 and the second jacket 600.

Specifically, the reinforcing core 220 is formed by a fiber reinforced composite material through an extrusion molding process. The reinforcing core 220 is positioned on the extrusion die of an extruder, the skeleton body 210 is formed outside the reinforcing core 220 by using a high-density polyethylene material through the extrusion die, and the accommodating groove 300 is simultaneously formed on the skeleton body 210. The optical fiber unit is placed into the accommodating groove 300 manually or by means of equipment to form a primary cable core. The first water-blocking tape is longitudinally wrapped outside the primary cable core, and the first water-blocking tape is bound outside the primary cable core by binding yarns, for preventing the first water-blocking tape from moving relative to the primary cable core. One layer of glass fiber can be placed outside the first water-blocking tape to form a cable core structure. An aluminum foil shielding layer 800 is wrapped on the outside of the conductive wire unit 700, and then two metal braiding strands staggered in the front and back directions are braided outside the shielding layer 800 through a high-speed braider to form a metal braided layer 810. The second water-blocking tape 820 is longitudinally wrapped outside the metal braided layer 810 and fixed by binding yarns to form a conductive core. With the polyethylene (PE) raw material and by an extruder, the first jacket 100 and the second jacket 600 are integrally formed outside the cable core and the conductive core to form a complete optical cable structure. According to the preparation method of the optical cable structure provided by the example, the production of a new type of optical cable structure with a supporting skeleton 200 is realized, and the produced optical cable structure can avoid the winding of the optical fiber unit 400 so that the diverging of the optical fiber unit 400 during wiring is facilitated, which is convenient in use.

Finally, it should be noted that: the above examples are merely illustrative of the technical schemes of the present invention and are not intended to be limiting thereof; although the present invention has been described in detail with reference to the foregoing examples, those skilled in the art will appreciate that: the technical schemes recited concerning the above examples can still be modified, or some or all of the technical features thereof can be equivalently replaced; such modifications or substitutions do not depart the nature of the corresponding technical schemes from the scope of the various examples and technical schemes of the present invention which is defined by the appended claims

## Claims

1. An optical cable structure, comprising: a first jacket (100), a supporting skeleton (200) provided in the first jacket (100), and an optical fiber unit (400);
wherein an accommodating groove (300) is provided within the supporting skeleton (200), the optical fiber unit (400) is embedded in the accommodating groove (300), and the supporting skeleton (200) is configured to always have a clamping force applied to the optical fiber unit (400),
wherein the width of the accommodating groove (300) is slightly smaller than the diameter of the optical fiber unit (400), and
wherein along the direction in which the first jacket (100) points toward the supporting skeleton (200), the width of the accommodating groove (300) is gradually increased to form a groove structure with a smaller opening and a larger internal width dimension, and the optical fiber unit (400) abuts against inner walls of the accommodating groove (300).

2. The optical cable structure according to claim 1, **characterized in that** the supporting skeleton (200) comprises a skeleton body (210) and a reinforcing core (220);
a filling chamber is provided in the skeleton body (210), the reinforcing core (220) is provided in the filling chamber, and the accommodating groove (300) is provided on the skeleton body (210).

3. The optical cable structure according to claim 1, **characterized in that** a water-blocking layer (500) and a heat-insulating layer (510) are sequentially provided between the first jacket (100) and the supporting skeleton (200) from inside to outside.

4. The optical cable structure according to claim 3, **characterized in that** the water-blocking layer (500) comprises a first water-blocking tape wrapped on the supporting skeleton (200);
the heat-insulating layer (510) comprises a glass fiber layer, and the glass fiber layer is sleeved outside the first water-blocking tape.

5. The optical cable structure according to claim 1, **characterized by** further comprising a second jacket (600) and a conductive wire unit (700) provided within the second jacket (600);
an outer wall of the second jacket (600) being connected to an outer wall of the first jacket (100).

6. The optical cable structure according to claim 5, **characterized in that** a shielding layer (800), a metal braided layer (810), and a second water-blocking tape (820) are sequentially provided between the second jacket (600) and the conductive wire unit (700) from inside to outside.

7. The optical cable structure according to claim 5, **characterized in that** the first jacket (100) and the second jacket (600) are each made of polyethylene material.

8. The optical cable structure according to claim 1, **characterized in that** the optical fiber unit (400) comprises a transmission optical fiber (410) and a nylon tight cover (420) sleeved outside the transmission optical fiber (410).

9. A preparation method for an optical cable structure, said preparation method comprising: a cable core forming procedure, a conductive core forming procedure, and a jacket forming procedure;
wherein the conductive core forming procedure comprises:
wrapping foil outside a conductive wire unit (700) to form a shielding layer (800);
braiding metal wires outside the shielding layer (800) through a braider to form a metal braided layer (810); and
wrapping a second water-blocking tape (820) outside the metal braided layer (810) to form a conductive core; and
the jacket forming procedure comprises:
a material being simultaneously applied outside the cable core and the conductive core through an extruder to form a first jacket (100) and a second jacket (600),
**characterized in that**
the cable core forming procedure comprises:
positioning a reinforcing core (220) on an extruder, and extrusion molding a skeleton body (210) outside the reinforcing core (220) by the extruder along a length direction of the reinforcing core (220), such that an accommodating groove (300) is provided with the skeleton body (210);
embedding an optical fiber unit (400) into the accommodating groove (300) to form a primary cable core; the skeleton body (210) being configured to always have a clamping force applied to the optical fiber unit,
the cable core forming procedure further comprises:
wrapping a first water-blocking tape outside the primary cable core; and
curing and forming a glass fiber layer outside the first water-blocking tape through a curing machine to form the cable core;
and **in that**
the width of the accommodating groove (300) is slightly smaller than the diameter of the optical fiber unit (400), and
along the direction in which the first jacket (100) points toward the skeleton body (210), the width of the accommodating groove (300) is gradually increased to form a groove structure with a smaller opening and a larger internal width dimension, and the optical fiber unit (400) abuts against inner walls of the accommodating groove (300).

## Patentansprüche

1. Optische Kabelstruktur, umfassend: eine erste Ummantelung (100), ein Stützskelett (200), das in der ersten Ummantelung (100) bereitgestellt ist, und eine optische Fasereinheit (400);
wobei eine Aufnahmekerbe (300) innerhalb des Stützskeletts (200) bereitgestellt ist, die optische Fasereinheit (400) in der Aufnahmekerbe (300) eingebettet liegt und das Stützskelett (200) dazu ausgelegt ist, immer eine Klemmkraft aufzuweisen, die auf die optische Fasereinheit (400) ausgeübt wird,
wobei die Breite der Aufnahmekerbe (300) etwas kleiner als der Durchmesser der optischen Fasereinheit (400) ist, und
wobei entlang der Richtung, in der die erste Ummantelung (100) zu dem Stützskelett (200) weist, die Breite der Aufnahmekerbe (300) allmählich zunimmt, um eine Kerbenstruktur mit einer kleineren Öffnung und einer größeren Innenbreitenabmessung zu bilden, und die optische Fasereinheit (400) an Innenwänden der Aufnahmekerbe (300) anliegt.

2. Optische Kabelstruktur nach Anspruch 1, **dadurch gekennzeichnet, dass** das Stützskelett (200) einen Skelettkörper (210) und einen Verstärkungskern (220) umfasst;
eine Füllkammer in dem Skelettkörper (210) bereitgestellt ist, der Verstärkungskern (220) in der Füllkammer bereitgestellt ist und die Aufnahmekerbe (300) auf dem Skelettkörper (210) bereitgestellt ist.

3. Optische Kabelstruktur nach Anspruch 1, **dadurch gekennzeichnet, dass** eine Wassersperrschicht (500) und eine wärmeisolierende Schicht (510) nacheinander zwischen der ersten Ummantelung (100) und dem Stützskelett (200) von innen nach außen bereitgestellt sind.

4. Optische Kabelstruktur nach Anspruch 3, **dadurch gekennzeichnet, dass** die Wassersperrschicht (500) ein erstes Wassersperrband umfasst, das um das Stützskelett (200) gewickelt ist;
die wärmeisolierende Schicht (510) eine Glasfaserschicht umfasst und die Glasfaserschicht außerhalb des Wassersperrbands aufgezogen ist.

5. Optische Kabelstruktur nach Anspruch 1, **dadurch gekennzeichnet, dass** sie weiter eine zweite Ummantelung (600) und eine leitfähige Verdrahtungseinheit (700), die innerhalb der zweiten Ummantelung (600) bereitgestellt ist, umfasst;
eine Außenwand der zweiten Ummantelung (600) mit einer Außenwand der ersten Ummantelung (100) verbunden ist.

6. Optische Kabelstruktur nach Anspruch 5, **dadurch gekennzeichnet, dass** eine Abschirmschicht (800), eine geflochtene Metallschicht (810) und ein zweites Wassersperrband (820) nacheinander zwischen der zweiten Ummantelung (600) und der leitfähigen Verdrahtungseinheit (700) von innen nach außen bereitgestellt sind.

7. Optische Kabelstruktur nach Anspruch 5, **dadurch gekennzeichnet, dass** die erste Ummantelung (100) und die zweite Ummantelung (600) jeweils aus Polyethylenmaterial hergestellt sind.

8. Optische Kabelstruktur nach Anspruch 1, **dadurch gekennzeichnet, dass** die optische Fasereinheit (400) eine optische Übertragungsfaser (410) und eine dichte Nylonabdeckung (420), die außerhalb der optischen Übertragungsfaser (410) aufgezogen ist, umfasst.

9. Herstellungsverfahren für eine optische Kabelstruktur, wobei das Herstellungsverfahren Folgendes umfasst: eine Bildungsprozedur für einen Kabelkern, eine Bildungsprozedur für einen leitfähigen Kern und eine Bildungsprozedur für eine Ummantelung;
wobei die Bildungsprozedur für den leitfähigen Kern Folgendes umfasst:
Aufwickeln von Folie außerhalb einer leitfähigen Verdrahtungseinheit (700), um eine Abschirmschicht (800) zu bilden;
Verflechten von Metalldrähten außerhalb der Abschirmschicht (800) durch einen Flechter, um eine geflochtene Metallschicht (810) zu bilden; und
Aufwickeln eines zweiten Wassersperrbands (820) außerhalb der geflochtenen Metallschicht (810), um einen leitfähigen Kern zu bilden; und
die Bildungsprozedur für die Ummantelung Folgendes umfasst:
Aufbringen eines Materials gleichzeitig außerhalb des Kabelkerns und des leitfähigen Kerns durch einen Extruder, um eine erste Ummantelung (100) und eine zweite Ummantelung (600) zu bilden,
**dadurch gekennzeichnet, dass**
die Bildungsprozedur für den Kabelkern Folgendes umfasst:
Positionieren eines Verstärkungskerns (220) auf einem Extruder und Extrusionsgießen eines Skelettkörpers (210) außerhalb des Verstärkungskerns (220) durch den Extruder entlang einer Längsrichtung des Verstärkungskerns (220),
sodass eine Aufnahmekerbe (300) mit dem Skelettkörper (210) bereitgestellt wird;
Einbetten einer optischen Fasereinheit (400) in der Aufnahmekerbe (300), um einen primären Kabelkern zu bilden; wobei der Skelettkörper (210) dazu konfiguriert ist, immer eine Klemmkraft aufzuweisen, die auf die optische Fasereinheit ausgeübt wird,
die Bildungsprozedur für den Kabelkern weiter Folgendes umfasst:
Aufwickeln eines ersten Wassersperrbands außerhalb des primären Kabelkerns; und
Härten und Bilden einer Glasfaserschicht außerhalb des Wassersperrbands durch eine Aushärtungsmaschine, um den Kabelkern zu bilden;
und dadurch, dass
die Breite der Aufnahmekerbe (300) etwas kleiner als der Durchmesser der optischen Fasereinheit (400) ist, und
entlang der Richtung, in der die erste Ummantelung (100) zu dem Skelettkörper (210) weist, die Breite der Aufnahmekerbe (300) allmählich zunimmt, um eine Kerbenstruktur mit einer kleineren Öffnung und einer größeren Innenbreitenabmessung zu bilden, und die optische Fasereinheit (400) an Innenwänden der Aufnahmekerbe (300) anliegt.

## Revendications

1. Structure de câble optique comprenant : une première gaine (100), un squelette de support (200) placé dans la première gaine (100), et une unité de fibre optique (400) ;
dans laquelle une rainure réceptrice (300) est formée dans le squelette de support (200), l'unité de fibre optique (400) est placée dans la rainure réceptrice (300), et le squelette de support (200) est configuré pour qu'une force de serrage soit toujours appliquée à l'unité de fibre optique (400),
dans laquelle la largeur de la rainure réceptrice (300) est légèrement plus petite que le diamètre de l'unité de fibre optique (400), et
dans laquelle, le long de la direction dans laquelle la première gaine (100) pointe vers le squelette de support (200), la largeur de la rainure réceptrice (300) augmente progressivement pour former une structure de rainure ayant une plus petite ouverture et une plus grande dimension de largeur intérieure, et l'unité de fibre optique (400) prend appui contre les parois internes de la rainure réceptrice (300).

2. Structure de câble optique selon la revendication 1, **caractérisée en ce que** le squelette de support (200) comprend un corps de squelette (210) et une âme de renforcement (220) ;
une chambre de remplissage est formée dans le corps de squelette (210), l'âme de renforcement (220) est placée dans la chambre de remplissage, et la rainure réceptrice (300) est placée sur le corps de squelette (210).

3. Structure de câble optique selon la revendication 1, **caractérisée en ce qu'**une couche étanche à l'eau (500) et une couche calorifuge (510) sont placées séquentiellement entre la première gaine (100) et le squelette de support (200) de l'intérieur vers l'extérieur.

4. Structure de câble optique selon la revendication 3, **caractérisée en ce que** la couche étanche à l'eau (500) comprend une première bande étanche à l'eau qui enveloppe le squelette de support (200) ;
la couche calorifuge (510) comprend une couche de fibre de verre, et la couche de fibre de verre est emmanchée sur la première bande étanche à l'eau.

5. Structure de câble optique selon la revendication 1, **caractérisée en ce qu'**elle comprend en outre une deuxième gaine (600) et une unité de fil conducteur (700) placée dans la deuxième gaine (600) ;
une paroi externe de la deuxième gaine (600) étant connectée à une paroi externe de la première gaine (100).

6. Structure de câble optique selon la revendication 5, **caractérisée en ce qu'**une couche de protection (800), une couche tressée métallique (810), et une deuxième bande étanche à l'eau (820) sont placées séquentiellement entre la deuxième gaine (600) et l'unité de fil conducteur (700) de l'intérieur vers l'extérieur.

7. Structure de câble optique selon la revendication 5, **caractérisée en ce que** la première gaine (100) et la deuxième gaine (600) sont faites chacune d'un matériau de type polyéthylène.

8. Structure de câble optique selon la revendication 1, **caractérisée en ce que** l'unité de fibre optique (400) comprend une fibre optique de transmission (410) et une protection serrée en nylon (420) qui enveloppe la fibre optique de transmission (410).

9. Procédé de préparation pour une structure de câble optique, ledit procédé de préparation comprenant : une procédure de formation d'une âme de câble, une procédure de formation d'une âme conductrice, et une procédure de formation de gaine ;
dans lequel la procédure de formation d'une âme conductrice comprend les étapes suivantes :
enrouler une feuille métallique autour d'une unité de fil conducteur (700) pour former une couche de protection (800) ;
tresser des fils métalliques à l'extérieur de la couche de protection (800) au moyen d'une machine à tresser pour former une couche tressée métallique (810) ; et
enrouler une deuxième bande étanche à l'eau (820) autour de la couche tressée métallique (810) pour former une âme conductrice ; et
la procédure de formation de gaine comprend l'application simultanée d'un matériau sur l'âme de câble et sur l'âme conductrice au moyen d'une extrudeuse pour former une première gaine (100) et une deuxième gaine (600),
**caractérisé en ce que**
la procédure de formation d'âme de câble comprend les étapes suivantes :
positionner une âme de renforcement (220) sur une extrudeuse, et mouler par extrusion un corps de squelette (210) sur l'âme de renforcement (220) au moyen de l'extrudeuse le long d'une direction de longueur de l'âme de renforcement (220), de manière telle qu'une rainure réceptrice (300) est formée avec le corps de squelette (210) ;
placer une unité de fibre optique (400) dans la rainure réceptrice (300) pour former une âme de câble principale ; le corps de squelette (210) étant configuré pour qu'une force de serrage soit toujours appliquée à l'unité de fibre optique,
la procédure de formation d'âme de câble comprend en outre les étapes suivantes :
enrouler une première bande étanche à l'eau autour de l'âme de câble principale ; et
faire durcir et former une couche de fibre de verre sur la première bande étanche à l'eau au moyen d'une machine de cuisson pour former l'âme de câble ;
et **en ce que** :
la largeur de la rainure réceptrice (300) est légèrement plus petite que le diamètre de l'unité de fibre optique (400), et
le long de la direction dans laquelle la première gaine (100) pointe vers le corps de squelette (210), la largeur de la rainure réceptrice (300) augmente progressivement pour former une structure de rainure ayant une plus petite ouverture et une plus grande dimension de largeur intérieure, et l'unité de fibre optique (400) prend appui contre les parois internes de la rainure réceptrice (300).
